# EUROPEAN PATENT APPLICATION

(11) **EP 3 715 438 A1**
(43) Date of publication of application: **30.09.2020**
(21) Application number: 19165520.8
(22) Date of filing: 27.03.2019
(51) Int. Cl.: C09K 17/22, C09K 17/32

(54) **SOIL CONDITIONING COMPOSITION AND SOIL CONDITIONING METHOD**

(71) Applicant: W.A.D. Global B.V., 6133 WT Sittard (NL)
(72) Inventor: Breuck, Gernot Klaus, 6432JP Hoensbroek (NL); Coenen, Julianus Petronella Gerardus, 6133WT Sittard (NL)
(74) Representative: Wittop Koning, Tom Hugo

(57) **Abstract**

Described is a composition for increasing the water retaining capacity and aeration of soil, comprising a first water retaining material being a superabsorbent polymer material, capable of absorbing at least 98 w/w% of water with regard to the weight of the superabsorbent polymer material, the absorption resulting in a volume increase of the superabsorbent polymer material corresponding with the volume of the water absorbed, the said superabsorbent polymer material, in an environment having a humidity of 70% or less, releasing at least a portion of the water absorbed therein to the said environment, and fibre material, capable of forming a web structure, the web structure retaining at least partially the volume increase obtained upon absorption of the water by the superabsorbent polymer material upon release of at least a portion of the water absorbed therein, therewith capable of cavity formation upon water release from the superabsorbent polymer material. Further the use of said composition as soil conditioner and a method for increasing the water retaining capacity and aeration of soil is described.

## Description

The invention relates to a composition for increasing the water retaining capacity and aeration of soil.

In agriculture, the problem of lack of water retaining capacity and aeration of soil is encountered, in particular in regions of low rainfall and in regions where the soil comprises coarse sand and/or clay. These conditions are e.g. encountered in east Africa, such as Kenia and Tanzania. However, soils of clay and/or coarse sand are very abundant throughout the world.

A problem of clay soils is that the aeration is minimal, and in case of drought, the water retaining capacity is very low or even absent. Such clay soils tend to become more and more compact upon drought, resulting in the inability to absorb water. In soils of coarse sand however, i.e. having a grain size of 0.7 mm or higher, the water is not retained but passes to lower earth layers, not reachable by plant roots. For plant growth both in free soil as in pots, an aerated soil comprising water, and nutrients comprised therein, that can be taken up is a prerequisite.

Attempts have been made to enrich the soil with superabsorbent polymer (SAP) materials. Superabsorbent polymer material is known in the art. SAP is a polymer material that is capable of absorbing and retaining its own weight of water many times. It swells up to a hydrogel that can consist of more than 99% water. It also holds the moisture under pressure. SAPs are mainly used as granulate in diapers and incontinence products. Modern SAPs are polymers based on acrylic acid or methacrylic acid, which has been polymerized together with an internal crosslinking agent, making connections between the polymer molecules so that they form a three-dimensional network that can swell but not dissolve in water. Also, natural materials, such as polysaccharides and proteins are known to perform superabsorbent properties. Also, soy protein/polyacrylic acid superabsorbent polymers have been prepared. The polymers may be partially neutralized, for example with sodium or potassium hydroxide. The remaining acid groups and the sodium or potassium ions ensure the retention of water molecules. In order to retain the moisture under pressure, a second cross-linking on the surface of the SAP granules can be carried out with a surface crosslinking agent. The denser cross-linking on the surface allows the SAP granules to retain the absorbed moisture under pressure.

Superabsorbent polymer materials are usually designed to absorb as much water as possible without the capacity to release the water once absorbed. However, for the present invention it is important that the superabsorbent polymer material releases at least a portion of the water absorbed therein below a particular humidity of the environment, i.e. the air above the soil wherein the composition is incorporated. The release can e.g. be spontaneous and release to the direct surroundings of the superabsorbent material, such as cavities in the soil in the form of damp or as liquid water, or the water can be taken up by roots of plants that are in contact with the superabsorbent polymer material. To this end, the superabsorbent polymer material releases at least a portion of the water absorbed therein when the humidity of the environment is 75% or less. In particular, at least 25%, preferably at least 40 %, more preferably at least 50% and most preferably at least 65% of the water absorbed in the superabsorbent material is release at a humidity of 70% or less. It is to be understood that more water will be released when the humidity is lower. Not all superabsorbent materials will have the capability to release a portion of the water absorbed therein below a certain humidity. However, superabsorbent polymer materials are known, that do release at least a portion of the water when the humidity of the environment drops to below a certain level. The superabsorber polymer materials are preferably resistant to both aerobic and anaerobic conditions and may be biologically degradable, but it is preferred that if biologically degradable, the superabsorber polymer material has a long half-life, i.e. preferably not more than 10% of the polymer material degrades in a year time when incorporated in the envisaged soil. For this reason, the plurality of proteins and polysaccharides that may be suitable as superabsorber polymers may not be the preferred choice for the composition of the present invention. Examples of suitable SPs are e.g. Luquasorb, BASF, Germany, Hysorb, BASF, Germany, Geohumus, Germany, Stockosorb, Evonik, Germany, Hysorb, BASF, Germany. The skilled person will readily be able to determine whether a superabsorbent material is capable of releasing a portion of the water absorbed therein at a particular humidity. To this end, the superabsorber polymer material is first contacted with as much water as it can absorb, i.e. by weighing a particular amount of the superabsorber polymer material in a glass beaker, such as 1 g, whereafter water is added. If 500 ml water can be added that is completely absorbed (i.e. not leaking out of the beaker, then the superabsorbent polymer material absorbs 99.8% of its weight water. The total weight is then 500 g of the water and 1 g of the polymer material, plus the weight of the beaker. By incubating the said beaker in a climatized room having a particular humidity for e.g. 24 hours, the capability of water release can be determined by weighing the beaker wherefrom the unbound water has been removed, e.g. by decanting the beaker. The values of absorptions and release of water by the superabsorbent polymer are to be understood as values valid for ambient temperature, i.e. about 20 - 24°C.

In the art, it was contemplated to use such superabsorbent polymer materials known from the art to increase the water retaining capacity of soil by mixing the said materials in the soil. However, it was found that water/moisture absorption by the SAP materials took place, with concomitant volume increase as a result of the water absorption, but after release of the water/moisture from the SAP material, the soil tends to collapse, imparting rainfall or irradiation moisture to enter the soil. Further, by the collapse of the soil, an anaerobic environment is created that is detrimental for the oxygen dependent oxidation reaction of ammonium into nitrate. Herein, the term 'water' is also meant to encompass aqueous mixtures of water comprising nutrients or other compounds present in the soil or the composition that are present in the water when the water is absorbed by the SAP material.

The inventors now found that the soil did not, or to a much lesser extent tends to collapse upon release of water/moisture by the SAP by combining an SAP of the above kind with fibre material, capable of forming a web structure, the web structure retaining at least partially the volume increase obtained upon absorption of the water by the superabsorbent polymer material upon release of at least a portion of the water absorbed therein, therewith capable of cavity formation upon water release from the superabsorbent polymer.

Such fibres form a web or skeleton around the SAP therewith avoiding the collapse of the soil when the volume of the SAP decreases upon water/moisture release. As soon as water is released from the SAP material, the volume of the SAP is reduced, leaving cavities behind that are structurally supported by the fibres, that form a skeleton that is strong enough to withstand the pressure of the soil. The cavities allow for sufficient aeration of the soil and therewith providing an aerobic soil environment enabling nitrate formation in the soil.

Attractively, the superabsorbent polymer material is capable of absorbing at least 99 w/w%, preferably at least 99.5 w/w%, more preferably at least 99.8 w/w% and most preferably at least 99.9 w/w% of water with regard to the weight of the superabsorbent polymer material. This means that in the latter situation, 0.5 g of the SAP material is capable of absorbing 500 ml water. The volume increase preferably corresponds with the said weight increase.

In another attractive embodiment, the SAP material releases at least a portion of the water at a humidity 75% or less. Above the said humidity, the plants in the soil will obtain sufficient water from the environment and there is less need for the plants to be provided with additional water from the soil. However, when the humidity lowers to 75% or below, the plant needs to take up water from the soil, and the superabsorber polymer material should be able to release the water needed to the environment or the roots of the plants.

Many SAP materials are known in the art. SAP materials having the above-described qualities can be identified by the skilled person and used in the composition of the invention. A preferred SAP material fulfilling the above properties of water retaining capacity and release thereof comprises acrylic and/or methacrylic acid based polymers, in particular comprising crosslinked polyacrylate, more preferably crosslinked sodium polyacrylate. However, also non-acrylic suitable superabsorbers are known, and can be suitable in the composition of the invention, such as Geohumus (Geohumus, Germany).

Suitable fibre materials are known in the art. Preferably, the fibres have a size of up to 6 cm, more preferably of up to 5 cm, or 4 cm. The fibres are preferably derived from organic material, known in the art. However, inorganic fibre material can also be suitable, such as e.g. fibres of asbestos. The fibres need to be sufficient stiff in order to resist the soil pressure that is created when water is released from the SAP material and the concomitant shrinkage of the SAP material. Examples of such fibres are vegetable fibres, in particular cellulose fibres. Examples of such fibres are e.g. palm fibres, palm nut fibres, such as palm nut fibres from Areca catechu, fibres derived from Cannabis etc. Most preferred is xylite, a residual product of lignite mining. Xylite is also known as fossil wood, or as 'xyloid lignite' in contrast to compact or perfect lignite. In particular when the xylite is crushed to fibres of a size of 5 cm or lower, or 4 cm or lower, (e.g. determined by passing the crushed xylite through a sieve having the envisaged mesh size), such xylite is optimal fibre material for the composition of the invention. Xylite is an organic material, as it is of biological origin, but retains a high structural stability over time, and is quite resistant against biological degradation. EP2060549 describes the structural stability of xylite in a substantially peat free plant soil substrate comprising volcanic rock.

Preferably at least 90 w/w%, more preferably 95 w/w% even more preferably 98 w/w% or 99 w/w% or 100 w/w% of the crushed xylite has particle size between 0.5 and 5 cm, preferably between 1.0 and 5.0 cm, more preferably between 1.5 and 4.0 cm, preferably below 5 mm. Small xylite fractions of up to 10 mm or up to 20 mm, e.g. 5 - 15 mm are however suitable for use in compositions of the invention, intended for conditioning soil for potted plants. However, for horticultural and agricultural use in free soil, the larger fractions are preferred. It is to be noted that smaller xylite fractions, e.g. of below 5 mm may not contribute to the volume of the composition, but the presence thereof is not disadvantageous as it was found that the small xylite fractions have a retaining capacity for water and nutrients dissolved therein. As explained above, such small xylite fractions do not contribute to the capability to provide cavities.

In another attractive embodiment, the composition further comprises organic compost, preferably of vegetable origin. Compost provides for nutrients that can be taken up by plants to be grown in the soil to be treated with the composition as described herein. The compost is preferably sterile, e.g. by a heat treatment at 70°C, in order to avoid undesired compost-borne growth in the soil treated with the present composition. To compost preferably has a particle size of up to 15 mm, preferably of 2 - 10 mm to have a good density, compatible with the other volume determining ingredients of the composition.

The term 'volume determining ingredients' or 'volume controlling ingredients' relate to ingredients of the composition that affect the volume thereof. As the composition comprises coarse particulate material such as the fibre material and the compost, these ingredients have a direct impact on the volume of the composition. Fine materials like powdery materials, added in lower amounts, will not have a significant impact on the volume of the composition (i.e. less than 5 v/v%, preferably less than 4 v/v%, more preferably less than 3 v/v%, even more preferably less than 2 v/v%, still even more preferably less than 1 v/v% and most preferably 0 v/v%) as these materials will enter the cavities within the composition. The volume controlling constituents are therefore indicated in volume percentage (v/v%), whereas the small-sized ingredients that do not have a significant impact on the volume are indicated in mass per volume (kg/m³).

In a very attractive embodiment, the composition further comprises one or more volume controlling filler materials. Such filler materials affect the volume of the composition. In such a composition, the volume is determined by the fibre material, the compost and the filler material. Preferably, one or more of the one or more volume controlling materials is a second water retaining material, i.e. having water retaining capacity in addition that of the SAP material as discussed above. Such material provides for additional water retaining capacity. Any material that can retain and release water would be suitable, such as materials having a sponge activity, porous material, like hydrograins of expanded clay used in horticulture, clay minerals, stone powder, volcano minerals, pumice and hydrogels. In particular material of biological origin with water binding and releasing capacity is used, such as starch containing materials, such as peat, particularly white peat, high moor peat, cocopeat. Such material functions as a sponge and provides for additional water retaining capacity of the composition.

In a particular embodiment, the composition comprises, based on the total weight of the composition:
- 10 - 50 v/v%, preferably 15 - 40 v/v%, more preferably 20 - 30 v/v% fibre material,
- 10 - 50 v/v%, preferably 15 - 40 v/v%, more preferably 20 - 30 v/v% organic compost, and
- 0 - 80 v/v%, preferably 20 - 70 v/v%, more preferably 40 - 60 v/v% volume controlling filler material.

As these constituents determine the volume of the composition, the volume percentages add up to a total of 100 v/v%, optionally in combination with additional volume determining constituents. However, it is preferred for the composition that the volume thereof is determined by the above three components.

The composition preferably comprises 1 - 15 kg/m³, preferably 1 - 10 kg/m³ superabsorbent polymer material. In case of an acrylate based superabsorbing polymer, the level can be even less, depending on the water retaining capacity of the SAP. For example, 1 - 5 kg/m³ is a preferred level for the above-described Luquasorb product. It was observed that such a composition provides for an optimal soil conditioning composition, resulting in significant increase of water retaining capacity and aeration of the soil treated therewith.

The composition preferably further comprises additives, in particular inorganic additives, such as nutrients, in particular chosen from the group, consisting of phosphate, nitrate, and potassium. It is to be noted that nitrate can also be formed by aerobic antimicrobial conversion of ammonium, as described above. To that end, the soil needs to be aerated, i.e. be in contact with the environmental air and/or comprise air chambers.

An attractive additive to be added to the composition is a pH regulating agent. Fertile soil preferably has a pH of 5.5 - 7. If a particular pH is envisaged for the soil , e.g. chalk, carbonated lime or calcium carbonate can be added in order to increase the pH value, i.e. to confer acidic soil to a more neutral value. It is however also possible to use an acid, such as citric acid, or any other suitable acid to lower the pH if necessary.

The invention further relates to the use of the composition as described herein as soil conditioner.

In another embodiment, the invention relates to a method for increasing the water retaining capacity and aeration of soil, comprising the steps of:
i. Providing the composition as described herein,
ii. Mixing the composition with the soil.

It was found that when the composition as described herein is mixed with soil, the water retaining capacity and aeration of the said soil is significantly improved rendering the soil better suitable for growing agriculturally interesting crops. It was found that when the composition is mixed with the soil in a weight ratio composition : soil of 0.1 - 0.7 : 1, preferably 0.2 - 0.5 : 1, an optimal soil is obtained, with the desired water retaining capacity and aeration for sequential growth and harvest of multiple crops, such as potatoes and corn. It is observed that hen the soil mainly consists of coarse sand, the optimal weight ratio composition to soil is about 1 : 2, whereas the optimal ratio for soil comprising organic materials and humus is about 1 :3. The term 'about' allows for a deviation of the given number by at most 20%, preferably at most 10%, more preferably at most 5% and most preferably at most 2%.

The invention will now be further illustrated by way of the following examples:

### Composition 1:

50 v/v% High moor peat 0 - 20 mm (Gabco, Germany)
25 v/v% Xylite 20 - 40 mm (Horticon, Germany)
25 v/v% Green compost 0 - 15 mm (Gabco, Germany)
3k g/m³ Superabsorber Luquasorb 1161 (BASF, Germany)
1.5 kg/m³ Carbonated lime (Gabco, Germany)
0.5 kg/m³ NP Fertiliser 20 - 10 (Gabco, Germany)

### Composition 2:

50 v/v% Buffered cocopeat 0 - 15 mm (Eifel Holz, Belgium)
25 v/v% Xylite 20 - 40 mm (Horticon, Germany)
25 v/v% Green compost 0 - 15 mm (Gabco, Germany)
10 kg/m³ Geohumus (Geohumus, Germany)
1.5 kg/m³ Carbonated lime (Gabco, Germany)
0.5 kg/m³ NP Fertiliser 20-10 (Gabco, Germany)

### Test plot 1

A test was made in a plots at "Nakheel Islands", later "Jumairah Islands" in Dubai, United Arab Emirates. Here small shrubs were planted on one plot in traditional soil, consisting mainly of coarse sand, whereas a neighbor plot was prepared by mixing the above composition 1 by with the originally present coarse sand, in a cement mixer in a ratio composition 1 to sand of 1:2. In the test plots shrubs were be planted and therefore the layer depth of the mixture was around 90 cm.

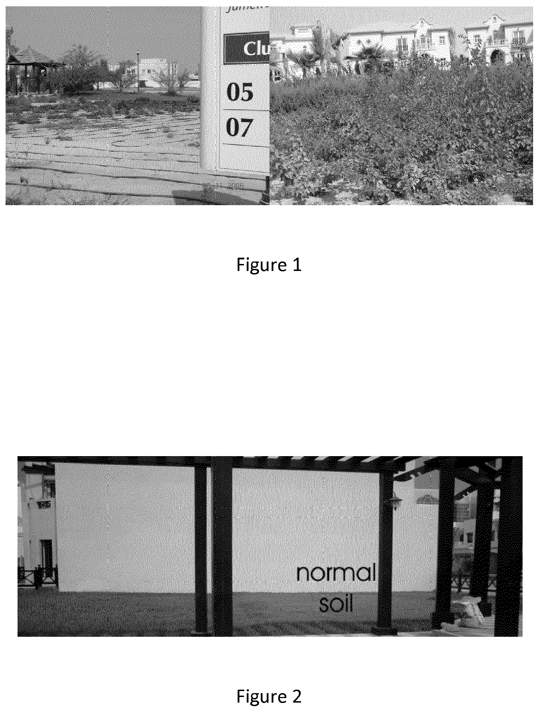

The irrigation for the test plot comprising the mixture was reduced to the half (each second day instead of daily) and yet a significant difference could be observed already 2 months later. The growth of the plant was more than 70% higher than in the reference plot and that was even clearer after half a year, see figure 1, left panel for the untreated plot, and the right panel for the plot, treated with composition 1.

### Test plot 2

A test was made at Sorouh Island in Abu Dhabi,United Arab Emirates. One plot was treated as described for test plot 1, however, the layer depth of the mixture was around 30 cm. Grass was planted by seeding seeds both on the reference plot and on a neighbour plot treated with composition 1.

Half a year later a significant difference in growth was visible. A growth gain of more than 30% could be observed for the lot, treated with composition 1. The grass of the treated plot appeared to be darker and healthier as compared to the grass of in the reference plot. See figure 2, at the right for the untreated plot ('normal soil'), and at the left for the plot, treated with composition 1.

In both tests the advantage of the composition as soil improving substrate could be confirmed by an average growth gain of at least 50%.

Similar results have been obbserved when usinig composition 2. Both compositions 1 and 2 were used with the same advantage for potted plants, wherein the xylite fraction was 0 - 10 mm or 5 - 15 mm (both Horticon, Germany) instead of 20 - 40 mm.

## Claims

1. Composition for increasing the water retaining capacity and aeration of soil, comprising:
a. a first water retaining material being a superabsorbent polymer material, capable of absorbing at least 98 w/w% of water with regard to the weight of the superabsorbent polymer material, the absorption resulting in a volume increase of the superabsorbent polymer material corresponding with the volume of the water absorbed, the said superabsorbent polymer material, in an environment having a humidity of 70% or less, releasing at least a portion of the water absorbed therein to the said environment, and
b. fibre material, capable of forming a web structure, the web structure retaining at least partially the volume increase obtained upon absorption of the water by the superabsorbent polymer material upon release of at least a portion of the water absorbed therein, therewith capable of cavity formation upon water release from the superabsorbent polymer material.

2. Composition of claim 1, wherein the superabsorbent polymer material is capable of absorbing at least 99 w/w%, preferably at least 99.5 w/w%, more preferably at least 99.8 w/w% and even more preferably at least 99.9% of water with regard to the weight of the superabsorbent polymer material.

3. Composition of claim 1 or 2, wherein the said superabsorbent polymer material releases at least a portion of the water absorbed therein to the environment, when the environment has a humidity of 75% or less.

4. Composition of any of the preceding claims, wherein the superabsorbent polymer material comprises acrylic and/or methacrylic acid based polymers, preferably crosslinked polyacrylate, more preferably crosslinked sodium polyacrylate.

5. Composition of any of the preceding claims, wherein the fibre material is derived from organic material, preferably derived from biological material, preferably chosen from the group, consisting of xylite, palm nut fibres and cellulose.

6. Composition of claim 5, wherein the fibre material is xylite crushed to pass through a 5 cm mesh sieve, preferably to a 4 cm mesh sieve, preferably at least 90 w/w% of the crushed xylite having a particle size between 0.5 and 5 cm, preferably between 1 and 5 cm, more preferably between 1.5 and 4 cm.

7. Composition according to any of the preceding claims, further comprising organic compost, in particular of vegetable origin, the organic compost preferably being sterile, the compost preferably having a particle size of 2 - 10 mm.

8. Composition of any of the preceding claims, further comprising one or more volume controlling filler materials.

9. Composition of claim 10, wherein one or more of the one or more volume controlling materials is a second water retaining material, the second water retaining material preferably being chosen from porous material, material of biological origin capable of binding and releasing water, in particular starch containing materials, the said material of biological origin preferably comprising peat, in particular white peat.

10. Composition of any of claims 7 - 9, comprising:
10 - 50 v/v%, preferably 15 - 40 v/v%, more preferably 20 - 30 v/v% fibre material,
10 - 50 v/v%, preferably 15 - 40 v/v%, more preferably 20 - 30 v/v% organic compost, and
0 - 80 v/v%, preferably 20 - 70 v/v%, more preferably 40 - 60 v/v% volume controlling filler material.

11. Composition of any of the preceding claims, comprising 1 - 15 kg/m³, preferably 1 - 10 kg/m³ superabsorbent polymer material.

12. Composition of any of the preceding claims, further comprising one or more inorganic additives, such as nutrients, chosen from phosphate, nitrate, potassium or a combination thereof; pH regulating agents, such as chalk, the composition preferably comprising 1 - 5 kg/m³ inorganic additives.

13. Use of the composition of any of the preceding claims as soil conditioner.

14. Method for increasing the water retaining capacity and aeration of soil, comprising the steps of:
i. Providing the composition of any of claims 1 -12,
ii. Mixing the composition with the soil.

15. Method of claim 14, wherein the composition is mixed with the soil in a weight ratio composition : soil of 0.1 - 0.7 : 1, preferably 0.2 - 0.5 : 1.
